# EUROPÄISCHE PATENTANMELDUNG

(11) **EP 3 964 459 A1**
(43) Veröffentlichungstag der Anmeldung: **09.03.2022**
(21) Anmeldenummer: 21187917.6
(22) Anmeldetag: 27.07.2021
(51) Int. Cl.: B65G 27/34, B65G 43/10, G05B 19/418, G06F 13/38, B65G 27/24, B65G 27/30

(54) **SCHWINGFÖRDERER MIT EINER STEUEREINRICHTUNG**

(30) Priorität: 04.09.2020 DE 102020123195
(71) Anmelder: Afag Holding AG, 6052 Hergiswil (CH)
(72) Erfinder: MESAN, Izudin, 90439 Nürnberg (DE); DURAND, Friedrich, 4522 Rüttenen (CH); BOTT, Klaus, 90518 Altdorf (DE)
(74) Vertreter: Lindner Blaumeier Patent- und Rechtsanwälte

(57) **Zusammenfassung**

Schwingförderer mit einer Fördervorrichtung (4) und einer Antriebseinrichtung (5), die bei einer Ansteuerung der Antriebseinrichtung (5) durch eine Steuereinrichtung (12) eine Schwingung der Fördervorrichtung (4) bezüglich einer Basis (9) des Schwingförderers (1, 2, 3) anregt, um durch eine Förderoberfläche (11) der Fördervorrichtung (4) gelagerte Objekte (10) durch diese Schwingung zu fördern, wobei die Steuereinrichtung (12) in die Basis (9) integriert oder an der Basis (9) angebracht ist und wenigstens eine Kommunikationsschnittstelle (13, 14) zur Kommunikation mit einer externen Kommunikationseinrichtung (15, 16, 17), insbesondere mit einer Kommunikationseinrichtung (16, 17) eines weiteren Schwingförderers (2, 3), umfasst, wobei die Steuereinrichtung (12) dazu eingerichtet ist, bei einem Empfang einer Kommunikationsnachricht (18), die eine Adressinformation (20) und eine Steuerinformation (19) umfasst, über die Kommunikationsschnittstelle (13, 14) eine Adressierungsbedingung zu prüfen, deren Erfüllung von der Adressinformation (20) abhängt, und ausschließlich bei Erfüllung der Adressierungsbedingung die Ansteuerung der Antriebseinrichtung (5) in Abhängigkeit der Steuerinformation (19) zu verändern und/oder einen internen Steuerparameter, von dem wenigstens eine zeitlich nachfolgende Ansteuerung der Antriebseinrichtung (5) durch die Steuereinrichtung (12) abhängt, auf einen von der Steuerinformation (19) abhängigen Wert zu setzten.

## Beschreibung

Die Erfindung betrifft einen Schwingförderer mit einer Fördervorrichtung und einer Antriebseinrichtung, die bei einer Ansteuerung der Antriebseinrichtung durch eine Steuereinrichtung eine Schwingung der Fördervorrichtung bezüglich einer Basis des Schwingförderers anregt, um durch eine Förderoberfläche der Fördervorrichtung gelagerte Objekte durch diese Schwingung zu fördern. Daneben betrifft die Erfindung eine Vorrichtung, die einen solchen Schwingförderer umfasst.

Ein üblicher Ansatz zum Antrieb von Schwingförderern ist es, ein an ihrer Fördervorrichtung, beispielsweise an einer Schwingschiene, befestigtes Joch durch einen periodisch bestromten Elektromagneten periodisch anzuziehen, um Schwingungen der Fördervorrichtung zum Transport der gelagerten Objekte anzuregen. Um die Amplitude der Schwingung einstellen zu können und unter Umständen auch eine Frequenzeinstellung der Schwingung zu ermöglichen, werden üblicherweise Steuereinrichtungen genutzt, die die Spannung bzw. den Strom für den Elektromagneten mithilfe einer Phasenanschnittsteuerung oder einer Pulsweitenmodulation bereitstellen. Entsprechende Steuereinrichtungen können beispielsweise an Maschinengestellen oder in Schaltschränken angeordnet sein.

In vielen Anwendungsfällen soll ein Schwingförderer nicht durchgehend betrieben werden, sondern nur dann, wenn bestimmte Sensorsignale von einem Ultraschallsensor oder einer Lichtschranke vorliegen oder in bestimmten zeitlichen Intervallen. Für solche Anwendungsfälle weisen bekannte Steuereinrichtungen für Schwingförderer Freigabeeingänge auf, die mit einer zentralen Steuerung verbunden werden können, wodurch die Bestromung des Schwingförderers durch eine zentrale Steuerung, beispielsweise einen zentralen Prozessrechner oder eine speicherprogrammierbare Steuerung (SPS), die typischerweise in einem Schaltschrank angeordnet wird, gesteuert werden kann. Hierbei kann vorgesehen sein, dass die Steuereinrichtung die Amplitude des Spulenstroms über ein gewisses Zeitintervall kontinuierlich erhöht, nachdem eine Freigabe durch die zentrale Steuerung erfolgt ist, um ein kontrolliertes Anlaufen des Schwingförderers sicherzustellen.

Sollen in komplexeren Vorrichtungen relativ viele Schwingförderer genutzt werden, beispielsweise um Werkstücke in verschiedenen Teilabschnitten einer automatisierten Fertigung zu bewegen, führt das beschriebene Vorgehen zu einem hohen Verkabelungsaufwand, da jeder Schwingförderer über Stromleitungen mit einer zugeordneten Steuereinrichtung verbunden werden muss und diese Steuereinrichtungen für die einzelnen Schwingförderer anschließend sternförmig mit einem zentralen Prozessrechner oder einer SPS verbunden werden müssen. Zudem müssen die einzelnen Sensorsignale zum Steuerrechner bzw. zur SPS geführt werden. Dies führt auch dazu, dass das Vorsehen zusätzlicher Sensoren, beispielsweise von Temperatursensoren oder Vibrationssensoren an den einzelnen Schwingförderern, um beispielsweise einen Wartungsbedarf oder andere Probleme frühzeitig zu erkennen, nur mit erheblichem Mehraufwand bezüglich der Verkabelung der einzelnen Schwingförderer möglich ist.

Ein weiterer Nachteil des beschriebenen Vorgehens ist es, dass die Änderung von Parametern der Förderer, insbesondere einer nach einem Anlaufen erreichten Schwingungsamplitude und Schwingungsfrequenz, typischerweise nur an der dem einzelnen Schwingförderer zugeordneten Steuereinrichtung möglich ist. Dies kann den Aufwand zur optimalen Einstellung einer Vorrichtung mit mehreren Schwingförderern deutlich erhöhen und es kann hierfür erforderlich sein, alle Steuereinrichtungen der einzelnen Schwingförderer gruppiert anzuordnen, wodurch der Verkabelungsaufwand weiter erhöht sein kann. Auch eine Synchronisation der Schwingungsphasen verschiedener Schwingförderer, die für bestimmte Transportaufgaben zweckmäßig sein kann, ist mit dem erläuterten Vorgehen nur sehr eingeschränkt möglich.

Der Erfindung liegt somit die Aufgabe zugrunde, eine Möglichkeit anzugeben, den Verkabelungsaufwand bei einer Nutzung von mehreren Schwingförderern zu reduzieren und hierbei vorzugsweise die Möglichkeiten zur Steuerung und Konfiguration der einzelnen Schwingförderer weiter zu verbessern.

Die Aufgabe wird erfindungsgemäß durch einen Schwingförderer der eingangs genannten Art gelöst, wobei die Steuereinrichtung in die Basis integriert oder an der Basis angebracht ist und wenigstens eine Kommunikationsschnittstelle zur Kommunikation mit einer externen Kommunikationseinrichtung, insbesondere mit einer Kommunikationseinrichtung eines weiteren Schwingförderers, umfasst, wobei die Steuereinrichtung dazu eingerichtet ist, bei einem Empfang einer Kommunikationsnachricht, die eine Adressinformation und eine Steuerinformation umfasst, über die Kommunikationsschnittstelle eine Adressierungsbedingung zu prüfen, deren Erfüllung von der Adressinformation abhängt, und ausschließlich bei Erfüllung der Adressierungsbedingung die Ansteuerung der Antriebseinrichtung in Abhängigkeit der Steuerinformation zu verändern und/oder einen internen Steuerparameter, von dem wenigstens eine zeitlich nachfolgende Ansteuerung der Antriebseinrichtung durch die Steuereinrichtung abhängt, auf einen von der Steuerinformation abhängigen Wert zu setzen.

Der Erfindung liegt die Idee zugrunde, eigene Intelligenz zur Steuerung des Antriebs in den Schwingförderer selbst zu integrieren, also eine Embedded-Lösung bereitzustellen. Hierbei kann vorzugsweise durch Integration eines FPGA oder auch eines Microcontrollers oder eines "System on a chip" ausreichend Rechenleistung bereitgestellt werden, dass zusätzlich zur Ansteuerung des Antriebs ein Kommunikationsstack implementiert werden kann, der eine Adressierung der jeweiligen Steuereinrichtung und somit des jeweiligen Schwingförderers innerhalb eines Netzes oder eines Busses erlaubt. Hierdurch kann von der eingangs diskutierten sternförmigen Verkabelung zur Steuerung mehrerer Schwingförderer durch eine zentrale Steuereinrichtung abgegangen werden und es kann bedarfsgerecht eine geeignete Netztopologie bzw. ein Bus genutzt werden, um die einzelnen Schwingförderer zu steuern. Wie später noch genauer erläutert werden wird, kann hierbei unter Umständen sogar auf einen zentralen Prozessrechner bzw. eine zentrale speicherprogrammierbare Steuerung verzichtet werden und es kann eine dezentrale Steuerung über die Steuerungen der Schwingförderer selbst implementiert werden.

Die Datenübertragung über die Kommunikationsschnittstelle erfolgt vorzugsweise digital. Dies ermöglicht es, über eine einzige Kommunikationsschnittstelle des Schwingförderers verschiedene Steueraufgaben durchzuführen, beispielsweise den Betrieb des Schwingförderers zu starten bzw. zu stoppen, also eine Freigabe zu erteilen, und gleichzeitig oder über separate Nachrichten die Amplitude, Frequenz und/oder Phase der Bestromung der Antriebseinrichtung bzw. der Schwingung anzupassen. Ergänzend kann über die Kommunikationsschnittstelle eine Übertragung von Informationen oder Steueranweisungen an weitere Schwingförderer, einen zentralen Prozessrechner oder eine zentrale SPS oder an weitere Einrichtungen innerhalb des gleichen Netzes bzw. am gleichen Bus erfolgen. Dies kann beispielsweise dazu dienen, Sensordaten von in den Schwingförderer integrierten bzw. dort angeschlossenen Sensoren an andere Schwingförderer bzw. eine zentrale Steuereinrichtung bereitzustellen. Beispielsweise können regelmäßig Messdaten eines Temperatur- und/oder eines Vibrationssensors an eine zentrale Steuereinrichtung gemeldet werden, um beispielsweise zu erkennen, ob eine Wartung des Schwingförderers erforderlich ist.

Die Kommunikationsschnittstelle kann insbesondere zur Verbindung mit einem seriellen Bus oder mit einem Netzwerk dienen und die Kommunikationsnachricht kann beispielsweise ein über den Bus oder das Netzwerk übertragenes Datenpaket sein, dessen Bits seriell übertragen werden. Die Kommunikationsschnittstelle kann jedoch auch eine parallele Kommunikation ermöglichen. Die Identifikationsinformation kann in diesem Fall sequentiell über die gleichen Leitungen übertragen werden wie die Steuerinformation oder auch über separate Leitungen.

Die Adressierungsbedingung kann prüfen, ob die Adressinformation oder eine hieraus ermittelte Verarbeitungsinformation mit einem vorgegebenen Wert oder mit einem von mehreren vorgegebenen Werten übereinstimmt. Sie kann ausschließlich im Falle einer solchen Übereinstimmung erfüllt sein. Es können jedoch auch Gültigkeitsintervalle für Adressinformationen angegeben werden und alle Adressen innerhalb dieses Gültigkeitsintervalls können berücksichtigt werden oder Ähnliches. Die Adressinformation kann somit insbesondere dazu dienen, einen einzelnen Schwingförderer auch eine Gruppe von Schwingförderern oder allgemein eine Gruppe von im Netz oder an dem Bus angeschlossenen Geräten zu adressieren.

Die Kommunikationsschnittstelle ist insbesondere eine drahtgebundene Schnittstelle, die vorzugsweise hohen Echtzeitanforderungen genügt. Als Schnittstelle kann beispielsweise EtherCat (IEC 61158), Profinet, Profibus, IONet oder Ähnliches genutzt werden. Prinzipiell könnten beispielsweise auch andere Ethernet-Protokolle, beispielsweise ein TCP/IP-Protokoll, genutzt werden. In Anwendungsfällen, in denen geringere Echtzeitanforderungen vorliegen, können auch drahtlose Kommunikationsschnittstellen verwendet werden und eine Kommunikation kann beispielsweise über Bluetooth, WLAN, ZigBee, WiMAX oder andere Funkverbindungen erfolgen. Alternativ kann eine Infrarot-Kommunikation über IrDA erfolgen.

Die Fördervorrichtung kann insbesondere eine Schwingschiene oder ein Fördertopf sein. Die Fördervorrichtung kann insbesondere über Federn, beispielsweise über Blattfederpakete, an der Basis angebracht sein. Die Steuereinrichtung kann hingegen starr an der Basis angebracht bzw. in diese integriert, beispielsweise in einer Ausnehmung oder Durchbrechung der Basis gehaltert, sein.

Die Antriebseinrichtung kann insbesondere eine Spule umfassen, die bei einer Bestromung ein Joch anzieht, um die Fördervorrichtung in Schwingung zu versetzen.

Die Steuereinrichtung kann ein FPGA sein oder einen FPGA umfassen. Durch die freie Programmierbarkeit eines FPGAs kann je nach Programmierung bzw. Konfiguration beispielsweise erreicht werden, dass unterschiedliche Bus- bzw.

Netzwerk-Protokolle an der Kommunikationsschnittstelle unterstützt werden, Eingangsdaten, beispielsweise erfasste Sensordaten, unterschiedlich ausgewertet werden, unterschiedliche Ansteuerungsmuster für den Antrieb realisiert werden können und Ähnliches. Durch die Struktur eines FPGAs ist dieser zudem zur gleichzeitigen Durchführung mehrerer Aufgaben, beispielsweise zur gleichzeitigen Kommunikation, Antriebssteuerung und Sensordatenerfassung, besonders gut geeignet. Zudem stehen typischerweise relativ viele Ein- und Ausgänge zur Verfügung, über die digitale Daten erfasst bzw. ausgegeben werden können. Durch Nutzung eines FPGAs können zudem auch bei gleichzeitiger Durchführung mehrerer paralleler Aufgaben definierte Reaktionszeiten sichergestellt werden und somit robust Echtzeitanforderungen erfüllt werden. Zudem kann der notwendige externe Schaltungsaufwand reduziert werden, da beispielsweise durch FPGAs auch große Teile von Analog-Digital-Wandlern bzw. Digital-Analog-Wandlern, insbesondere von Sigma-Delta-Wandler, durch eine entsprechende Konfiguration bzw. Programmierung des FPGAs realisiert werden können und somit entsprechende Funktionalitäten mit minimaler externer Beschaltung bereitgestellt werden können.

Insbesondere bei Ansteuerung der Antriebseinrichtung, also insbesondere bei Bestromung der Spule, mithilfe einer PWM-Steuerung können durch Digitalausgänge des FPGAs mittelbar oder unmittelbar Transistoren oder andere Schalter angesteuert werden, um die Bestromung der Spule zu steuern.

Alternativ zur Nutzung eines FPGAs könnte beispielsweise auch ein Microcontroller, eine CPU oder Ähnliches genutzt werden. Zum Erreichen der gleichen Anforderungen, insbesondere bezüglich der Echtzeitfähigkeit, wäre hierbei jedoch typischerweise ein höherer Stromverbrauch bzw. ein höherer Implementierungsaufwand erforderlich.

Die Steuereinrichtung kann eine Verarbeitungseinrichtung umfassen, die ein Kommunikationsprotokoll für die Kommunikation mit der externen Kommunikationseinrichtung über die Kommunikationsschnittstelle implementiert, wobei das Kommunikationsprotokoll durch eine Konfiguration oder ein Computerprogramm vorgegeben ist, wobei die Steuereinrichtung dazu eingerichtet ist, die Konfiguration oder das Computerprogramm über die Kommunikationsschnittstelle oder eine Programmierschnittstelle zu empfangen und/oder von einem wechselbaren Datenträger einzulesen. Unter einer Konfiguration ist hierbei insbesondere die Konfiguration eines FPGAs zu verstehen, die auch als Programmierung des FPGAs bezeichnet wird.

Durch das beschriebene Vorgehen wird insbesondere erreicht, dass durch Wechsel der Konfiguration bzw. des Computerprogramms das Kommunikationsprotokoll wechselbar ist, ohne andere Komponenten zu tauschen. Je nach Anschlusskonventionen kann es zwar zweckmäßig oder sogar erforderlich sein, genutzte Buchsen, Stecker oder Ähnliches zu tauschen bzw. Adapter zu nutzen. Dies ist jedoch erheblich weniger aufwändig als ein Austausch der gesamten Steuereinrichtung, also beispielsweise der Austausch einer Platine, die die Steuereinrichtung implementiert. Beispielsweise kann somit durch Wechsel der Konfiguration bzw. des Computerprogramms zwischen einer Nutzung von EtherCat, Profinet oder IONet gewechselt werden.

Ein weiterer Anwendungsfall für einen Wechsel des Kommunikationsprotokolls wäre beispielsweise ein Wechsel zwischen einem UA XML Stack, der OPC-UA über SOAP implementiert und einer Implementierung über UA Binary, die das UA TCP Protokoll nutzt. Während die zweite Variante einen geringeren Overhead ermöglicht, ist die erste Variante leichter in bestehende Netze einzubinden, da beispielsweise aufgrund der Nutzung von Port 80 häufig keine spezielle Konfiguration eines Firewalls erforderlich ist. Allgemein führt die zumindest bezüglich des Kommunikationsprotokolls freie Programmierbarkeit der Verarbeitungseinrichtung dazu, dass der erfindungsgemäße Schwingförderer mit sehr geringem Aufwand für eine Vielzahl verschiedener Anwendungsfälle konfigurierbar ist und z.B. sogar in bestehende Automatisierungsnetze eingebunden werden kann.

Bei einem Empfang einer neuen Konfiguration bzw. eines neuen Computerprogramms über die Kommunikationsschnittstelle kann diese bzw. dieses beispielsweise in der Steuereinrichtung zwischengespeichert werden und bei einem Neustart der Steuereinrichtung, der manuell oder automatisch nach Empfang entsprechender Daten erfolgen kann, geladen werden. Es wäre auch möglich, dass die Verarbeitungseinrichtung modular programmierbar ist, so dass beispielsweise eine abschnittsweise Rekonfiguration eines FPGAs bzw. ein Austausch von ausgeführten Programmteilen ohne einen Neustart der Steuereinrichtung möglich sein kann. Ein Vorteil eines Empfangs der Konfiguration bzw. des Computerprogramms über die Kommunikationsschnittstelle ist es, dass eine entsprechende Konfigurationsänderung ohne einen Zugriff auf den einzelnen Schwingförderer über das Netz oder den Bus möglich wird, weshalb ein entsprechendes Vorgehen insbesondere für Updates im Rahmen der Produktpflege zweckmäßig ist.

Die Nutzung einer dedizierten Programmierschnittstelle ist insbesondere dann zweckmäßig, wenn das Aufspielen der Konfigurationen bzw. des Computerprogramms bereits im Rahmen der Herstellung des Schwingförderers bzw. im Rahmen des Aufbaus einer größeren Vorrichtung erfolgen soll. Eine solche Programmierbarkeit ist häufig besonders einfach implementierbar, da beispielsweise eine Programmierung von FPGAs in anderen Anwendungsfeldern über den SPI-Bus bereits üblich ist. Alternativ könnte als Programmierschnittstelle beispielsweise ein I²C-Bus verwendet werden oder es könnte eine drahtlose Programmierung, beispielsweise durch Nahfeldkommunikation, erfolgen.

Als wechselbarer Datenträger kann insbesondere eine Flash-Karte, beispielsweise eine SD- oder eine CF-Karte, verwendet werden. Wechselbare Datenträger können gehäuseintern verbaut sein und beispielsweise nur im Rahmen einer Wartung bzw. der Herstellung gewechselt werden. Alternativ kann der Datenträger auch endkundenseitig wechselbar sein, beispielsweise, indem ein von außen zugänglicher Kartenslot am Schwingförderer vorgesehen ist. Der wechselbare Datenträger kann dauerhaft im Schwingförderer installiert sein, so dass beispielsweise bei jedem Starten der Steuereinrichtung die entsprechende Konfiguration bzw. das entsprechende Computerprogramm von diesem eingelesen wird. Es ist jedoch auch möglich, die Konfiguration bzw. das Computerprogramm auf einen internen Speicher des Schwingförderers zu kopieren, so dass der Datenträger im Anschluss wieder entfernt werden kann.

Die Verarbeitungseinrichtung kann dazu eingerichtet sein, gemäß der Konfiguration oder dem Computerprogramm Steuersignale zur Ansteuerung der Antriebseinrichtung bereitzustellen. Insbesondere kann die Verarbeitungseinrichtung vollständig frei programmierbar sein, so dass durch Änderung der Konfiguration bzw. des Computerprogramms im Wesentlichen eine beliebige Funktionalität implementiert werden kann, so lange ausreichend Ressourcen der Verarbeitungseinrichtung für die programmierten bzw. konfigurierten Aufgaben bereitstehen.

Die Steuersignale können als Digitalsignale ausgegeben werden, die beispielsweise Schalter bzw. Transistoren einer Leistungsstufe schalten. Alternativ wäre es möglich, dass als Steuersignale Analogsignale ausgegeben werden, beispielsweise um einen Schwellwert für eine Phasenanschnittsteuerung vorzugeben. Die Konfiguration bzw. Programmierung beeinflusst insbesondere die Abhängigkeit der Steuersignale von empfangenen Kommunikationsnachrichten und/oder von weiteren erfassten Daten, beispielsweise von Sensordaten.

Durch eine entsprechende Konfiguration bzw. Programmierung kann die Verarbeitungseinrichtung zusätzliche Steueraufgaben implementieren, ähnlich wie sie bislang durch eine externe SPS umgesetzt werden können. Besonders bevorzugt kann durch entsprechende Konfiguration bzw. Programmierung der Verarbeitungseinrichtung diese jedoch selbst eine SPS implementieren, die durch weitere empfangene oder am Gerät eingestellte Konfigurationsdaten konfiguriert wird. Dies ermöglicht beispielsweise eine nachträgliche Anpassung der SPS-Implementierung, beispielsweise bezüglich der Zahl oder Art der verarbeiteten Eingangssignale, bezüglich der erreichten Reaktionszeit bzw. bezüglich der Update-Rate für Steuersignale, der Wechselwirkung mit einer weiteren Kommunikation usw. Insbesondere kann durch die Konfiguration bzw. Programmierung der Verarbeitungseinrichtung eine Bridge zwischen der implementierten SPS und der Kommunikation über die Kommunikationsschnittstelle implementiert werden, so dass beispielsweise eine durch die Steuereinrichtung eines Schwingförderers implementierte SPS Sensordaten auswerten kann, die über die Kommunikationsschnittstelle von einem anderen Schwingförderer empfangen wurden.

Der Schwingförderer kann wenigstens einen integrierten Sensor und/oder wenigstens einen Sensoranschluss zum Anschluss eines externen Sensors aufweisen, wobei die Steuereinrichtung dazu eingerichtet ist, Sensordaten des integrierten Sensors und/oder über den jeweiligen Sensoranschluss Sensordaten des externen Sensors zu erfassen und zum einen die Sensordaten oder von den Sensordaten abhängige Kommunikationsdaten über die Kommunikationsschnittstelle an die externe Kommunikationseinrichtung zu übertragen und/oder zum anderen in Abhängigkeit der Erfüllung einer von den Sensordaten abhängigen Sendebedingung eine Kommunikationsnachricht über die Kommunikationsschnittstelle an die externe Kommunikationseinrichtung zu senden und/oder die Antriebseinrichtung in Abhängigkeit der Sensordaten zu steuern.

Als Sensor können beispielsweise ein Temperatur- und/oder ein Beschleunigungssensor verwendet werden. Diese Sensoren können insbesondere in den Schwingförderer integriert sein. Ergänzend oder alternativ kann als Sensor eine Lichtschranke, ein Ultraschallsensor oder Ähnliches genutzt werden. Solche Sensoren können insbesondere dazu dienen, die Belegung des Schwingförderers selbst oder eines anderen Teils einer Vorrichtung, deren Teil der Schwingförderer ist, durch zu transportierende Objekte zu erkennen. Dies kann beispielsweise dazu dienen, bei einem Leerlaufen des Schwingförderers den Betrieb des Schwingförderers vorübergehend einzustellen und/oder die Zuführung weiterer Objekte von vorgeschalteten Einrichtungen bzw. von einer zentralen Steuerung anzufordern.

Genutzte Sensoren können insbesondere Digitalsignale liefern, beispielsweise gemäß dem 24 V-Standard. Es ist jedoch auch möglich, dass zumindest einige der Sensoren Analogwerte, beispielsweise variable Spannungen bzw. Ströme, bereitstellen, die durch die Steuereinrichtung in digitale Werte gewandelt werden können.

Die Übertragung der Sensordaten bzw. der Kommunikationsdaten kann an eine zentrale Steuereinrichtung, beispielsweise einen zentralen Prozessorrechner bzw. eine zentrale SPS, erfolgen. Dies kann beispielsweise dazu dienen, Temperaturen bzw. Vibrationen der einzelnen Schwingförderer zur Abschätzung von Wartungsintervallen bzw. zur Überprüfung der korrekten Funktion zu sammeln oder Ähnliches.

Besonders bevorzugt können die Sensordaten bzw. die von diesen abhängigen Kommunikationsdaten jedoch an einen weiteren Schwingförderer übertragen werden. Beispielsweise kann ein Sensor, z. B. eine Lichtschranke, dessen Daten für den Betrieb des weiteren Schwingförderers relevant sind, relativ weit von dem weiteren Schwingförderer beabstandet sein. Aufgrund der vorgeschlagenen Ausgestaltung des Schwingförderers können diese Sensoren an einen beliebigen im gleichen Kommunikationsnetz bzw. am gleichen Bus betriebenen Schwingförderer angeschlossen werden und ihre Sensordaten können über das Netz bzw. den Bus an den weiteren Schwingförderer übertragen werden, so dass unter Umständen eine erheblich vereinfachte Verkabelung erreicht werden kann. Zudem ermöglicht es das vorgeschlagene Vorgehen, Sensordaten eines einzigen Sensors mit geringem Aufwand an mehrere Schwingförderer bzw. an deren Steuereinrichtungen bereitzustellen.

Eine Kommunikationsnachricht, die bei Erfüllung der Sendebedingung gesandt wird, kann beispielsweise eine Anforderung an eine vorangehende Verarbeitungsstufe bezüglich der Zuführung weiterer Objekte sein. Wird, beispielsweise anhand des Ausgangssignals einer Lichtschranke, erkannt, dass der Schwingförderer leerläuft, obwohl eine Förderung weiterer Objekte von nachfolgenden Verarbeitungsstufen gewünscht ist, kann eine solche Kommunikationsnachricht z.B. an die unmittelbar vorangehende Verarbeitungs- bzw. Förderstufe, beispielsweise an einen weiteren Schwingförderer, oder an eine zentrale Steuerung gesendet werden. Im einfachsten Fall kann dies dazu führen, dass der empfangende Schwingförderer aktiviert wird. Besonders vorteilhaft ist es jedoch, wenn dort wiederum geprüft wird, ob überhaupt zu fördernde Objekte vorliegen und anderenfalls die Anfrage wiederum an eine vorangehende Verarbeitungs- bzw. Förderstufe weitergeleitet wird. Hierdurch kann eine dezentrale Steuerung verschiedener Komponenten einer Vorrichtung realisiert werden.

Die Steuereinrichtung kann beispielsweise digitale Sensordaten von 8 oder 16 Sensoren oder auch von einer anderen Anzahl von Sensoren verarbeiten. Es kann ein von der Verarbeitungseinrichtung, beispielsweise von einem FPGA, separat ausgebildeter Baustein genutzt werden, um die relativ hohen Spannungen des 24 V-Standards auf für die Verarbeitungseinrichtung geeignete Spannungen umzusetzen. Ein solcher externer Baustein kann zusätzlich einen Multiplexer implementieren, um eine hohe Zahl von Sensoren über eine geringe Anzahl von Ein- und Ausgängen der Verarbeitungseinrichtung abfragen zu können.

Die Steuereinrichtung kann dazu eingerichtet sein, bei Erfüllung der Adressierungsbedingung einerseits eine Amplitude und/oder eine Frequenz und/oder eine Phase eines der Antriebseinrichtung zugeführten Wechselstroms und/oder einer an die Antriebseinrichtung ausgegebenen Wechselspannung in Abhängigkeit der Steuerinformation vorzugeben und/oder andererseits die Antriebseinrichtung nur dann zur Anregung der Schwingung der Fördervorrichtung anzusteuern, wenn eine von der Steuerinformation abhängige Freigabebedingung erfüllt ist. Insbesondere kann die Steuerinformation hierbei bedarfsgerecht verschiedene Anweisungen kodieren, um die jeweils adressierte Steuereinrichtung oder die jeweils adressierten Steuereinrichtungen anzuweisen, die Ansteuerung der Antriebseinrichtung anzupassen, also insbesondere die Amplitude, Frequenz bzw. Phase der Schwingung durch die entsprechende Bestromung bzw. Spannungsbeaufschlagung anzupassen bzw. den Betrieb des Schwingförderers freizugeben oder zu stoppen.

Bei einem Starten bzw. Stoppen des Schwingförderers durch Empfang einer entsprechenden Kommunikationsnachricht kann, wie es bei bisherigen einfacher gestalteten Steuereinrichtungen bezüglich einer Freigabe üblich ist, ein fest vorgegebenes Anlauf bzw. Abschaltverhalten vorgegeben sein bzw. ein solches Anlauf- bzw. Abschaltverhalten am Gerät selbst einstellbar sein. Beispielsweise kann nach einer Freigabe eine feste oder einstellbar vorgegebene Amplitudenrampe durchlaufen werden. Bei ausreichender Bandbreite und Echtzeitfähigkeit der Kommunikationsschnittstelle bzw. eines mit dieser verbundenen Busses oder Netzwerkes können entsprechende Amplitudenrampen oder ähnliche Parameter beim Anlaufen bzw. Abbremsen des Schwingförderers jedoch auch durch entsprechende Kommunikationsnachrichten vorgegeben werden.

Um eine gute Interoperabilität verschiedener Schwingförderer oder anderer Einrichtungen am gleichen Netz oder Bus zu ermöglichen und konkrete Implementierungsdetails zu abstrahieren, kann es hier vorteilhaft sein, eine serviceorientierte Architektur zu implementieren und zusätzlich zu den Parametern im Rahmen der Kommunikation eine maschinenlesbare semantische Beschreibung zu nutzen. Insbesondere können hierzu durch die Steuereinrichtung netzwerkaufrufbare Funktionen implementiert werden. Hierbei ist es vorteilhaft, gewisse Standardfunktionen zu implementieren, die beispielsweise weiteren Einrichtungen im Netz bzw. am Bus Listen der bereitstehenden Funktionen bzw. der setzbaren Parameter bereitstellen können. Hierbei kann es insbesondere vorteilhaft sein, den OPC-UA-Standard umzusetzen, der die Implementierung einer Gruppe von netzwerkaufrufbaren Standardfunktionen fordert, über die weitere Funktionalitäten und Parameter automatisiert ermittelt und kommuniziert werden können. Dies reduziert einerseits den Aufwand zur Entwicklung einer entsprechenden Kommunikationsschnittstelle und kann andererseits die Integration des erfindungsgemäßen Schwingförderers mit anderen Geräten, auch mit Geräten anderer Hersteller, verbessern, falls auch diese einen entsprechenden Kommunikationsstandard implementieren.

Die Steuereinrichtung kann dazu eingerichtet sein, wenigstens eine netzwerkaufrufbare Funktion über die Kommunikationsschnittstelle an die externe Kommunikationseinrichtung bereitzustellen und/oder über die Kommunikationsschnittstelle eine netzwerkaufrufbare Funktion der externen Kommunikationseinrichtung aufzurufen. Insbesondere kann die Kommunikation mit externen Kommunikationseinrichtungen, also beispielsweise mit Steuereinrichtungen von weiteren Schwingförderern, einem zentralen Prozessrechner bzw. einer zentralen SPS und/oder mit weiteren Einrichtungen im gleichen Netzwerk bzw. am gleichen Bus, beispielsweise mit Greifern, Lüftern, Heizern, etc., ausschließlich über netzwerkaufrufbare Funktionen erfolgen. Dies verbessert die Interoperabilität verschiedener Einrichtungen, da Implementierungsdetails der verschiedenen Einrichtungen im Sinne einer Objektorientierung vor externen Kommunikationspartnern verborgen werden können und zugleich automatisiert semantische Informationen bezüglich relevanter Parameter, Steuermöglichkeiten etc. an Kommunikationspartner bereitgestellt werden können.

Werden über die Kommunikationsschnittstelle ausschließlich netzwerkaufrufbare Funktionen bereitgestellt, wirkt die Steuereinrichtung bzw. der Schwingförderer beispielsweise im Rahmen einer OPC-UA Implementierung ausschließlich als Server. Durch Aufruf von netzwerkaufrufbaren Funktionen wenigstens einer externen Kommunikationseinrichtung kann die Steuereinrichtung bzw. der Schwingförderer zusätzlich oder alternativ als Client arbeiten. Eine gleichzeitige Implementierung von Server- und Clientfunktionen ist insbesondere dann zweckmäßig, wenn eine dezentrale Steuerung von Förder- oder Produktionsprozessen oder Ähnlichem erfolgen soll.

Vorzugsweise weist der Schwingförderer einen Anschluss für ein Hybridkabel auf, wobei der Anschluss einerseits Kontakte zur Stromversorgung des Schwingungförderers und andererseits wenigstens einen Kontakt der Kommunikationsschnittstelle oder einer der Kommunikationsschnittstellen aufweist. Beispielsweise kann der Anschluss vier Kontakte einer Kommunikationsschnittstelle aufweisen, wie sie beispielsweise bei üblichen Ethernet-Verbindungen bzw. hierauf aufbauenden Vernetzungsarchitekturen, wie beispielsweise EtherCat, genutzt werden, und zusätzlich zwei Stromkontakte. Gegenüber einer Nutzung von separaten Kabeln zur Stromversorgung und zur Kommunikation wird hierdurch der Verkabelungsaufwand reduziert. Insbesondere kann bei Nutzung einer linearen Netztopologie bzw. eines Busses von mehreren Schwingförderern bzw. von wenigstens einem Schwingförderer und weiteren Komponenten, erreicht werden, dass jeweils zwei der angeschlossenen Geräte bzw. Schwingförderer miteinander über nur ein einzelnes Kabel verbunden werden müssen, um sowohl eine Kommunikation zwischen den verschiedenen Einrichtungen als auch eine Stromversorgung zu erreichen.

Alternativ könnten auch Hybridkabel genutzt werden, die an ihren Enden separate Anschlüsse für Strom und Kommunikationskontakte aufweisen. Prinzipiell ist es auch möglich, Kommunikationssignale auf Stromleitungen aufzumodulieren. Dieser Ansatz wird beispielsweise bei EtherCat-P sowie in verschiedenen Powerline Communication bzw. PowerLAN-Standards genutzt. Hierbei kann die Kommunikation jedoch durch Störungen im Stromnetz, beispielsweise durch das Schalten von großen Lasten wie Kompressoren, die Nutzung von Phasenanschnittssteuerungen oder Ähnliches, unter Umständen beeinträchtigt sein.

Der Schwingförderer kann einen weiteren Anschluss zur Verbindung mit einer weiteren Komponente, insbesondere mit einem weiteren Schwingförderer, aufweisen, wobei der weitere Anschluss Kontakte für eine Stromversorgung der weiteren Komponente und wenigstens einen weiteren Kontakt umfasst, wobei der weitere Kontakt den Kontakt der Kommunikationsschnittstelle des Anschlusses durchschleift oder einen Kontakt einer weiteren der Kommunikationsschnittstellen ist. Hierdurch wird bei einem Durchschleifen des Kontakts der Kommunikationsschnittstelle eine Bustopologie bzw. bei der Nutzung der weiteren Kommunikationsschnittstelle in Verbindung mit einem Forwarden von Kommunikationsnachrichten eine Linien- bzw. Ringtopologie mit geringem Verkabelungsaufwand ermöglicht. Die Kontakte für eine Stromversorgung der weiteren Komponente können die Kontakte des anderen Anschlusses zur Stromversorgung des Schwingförderers selbst durchschleifen. Es können jedoch auch zwischengeschaltete Bauteile genutzt werden, beispielsweise um bei einer Nichtbelegung des weiteren Anschlusses diesen stromlos zu schalten, die Stromversorgung zu stabilisieren oder Ähnliches.

Die Fördervorrichtung kann über Federn an der Basis gelagert sein, wobei die Steuereinrichtung starr mit der Basis verbunden ist. Insbesondere kann die Fördervorrichtung über wenigstens ein Paar von in Schwingrichtung beabstandeten Blattfederpaketen an der Basis gelagert sein. Die Steuereinrichtung kann in diesem Fall insbesondere zwischen den Blattfederpaketen eines Paars angeordnet sein. Beispielsweise kann die Steuereinrichtung ein eigenes Gehäuse aufweisen, das in eine seitliche Ausnehmung der Basis eingesetzt und mit dieser verschraubt oder vernietet oder anderweitig an dieser befestigt ist. Die obig genannten Anschlüsse zum Anschluss von Hybridkabeln bzw. alternativ z.B. separate Anschlüsse für die wenigstens eine Kommunikationsschnittstelle und die Stromversorgung können an einer seitlichen Seitenfläche der Basis angebracht sein. Sie können jedoch auch an einem oder beiden Enden in Schwingrichtung an der Basis angebracht sein.

Alternativ zur Anordnung der Steuereinrichtung innerhalb der Basis bzw. zwischen Blattfederpaketen kann die Steuereinrichtung auch, insbesondere in einem separaten Gehäuse, seitlich an der Basis befestigt sein und somit die Basis senkrecht zur Schwingrichtung erweitern oder im Bereich eines der Enden in Schwingrichtung der Basis stirnseitig an dieser angebracht bzw. auf diese aufgesetzt sein.

Die Steuereinrichtung bzw. eine diese implementierende Leiterplatte muss nicht notwendig ein separates Gehäuse aufweisen, sondern kann alternativ auch in einem zumindest teilweise durch die Basis selbst begrenzten Hohlraum aufgenommen sein. Beispielsweise kann eine solche Leiterplatte zwischen zwei Teilkomponenten der Basis geklemmt sein.

Der Anschluss für das wenigstens eine Hybridkabel bzw. für die wenigstens eine Kommunikationsschnittstelle und die Stromversorgung sowie optional wenigstens ein Sensoranschluss zum Anschluss eines externen Sensors können an der Basis selbst angebracht sein oder an einer Deckplatte, die eine Ausnehmung der Basis, die die Steuereinrichtung aufnimmt, verschließt. Wenn die Steuereinrichtung ein separates Gehäuse aufweist, können sie auch an diesem Gehäuse angeordnet sein. Alle vorhandenen Anschlüsse können an einer Seite der Basis seitlich oder an einem Ende in Schwingrichtung angebracht sein. Besonders vorteilhaft kann es jedoch sein, jeweils einen der Anschlüsse für Hybridkabel an einem jeweiligen Ende der Basis in Schwingrichtung anzubringen.

Die Antriebseinrichtung kann durch einen Elektromagneten und ein Joch gebildet sein, wobei das Joch an der Fördervorrichtung angebracht ist oder durch diese ausgebildet ist und der Elektromagnet an einer schwingbar bezüglich der Basis gelagerten Gegenmasse angebracht ist oder umgekehrt. Beispielsweise können sowohl die Fördervorrichtung als auch die Gegenmasse über Blattfederpakete an der Basis gelagert sein. Die beschriebene Anordnung führt dazu, dass durch eine zeitlich veränderliche Bestromung des Elektromagneten eine Schwingung der Fördervorrichtung und der Gegenmasse in entgegengesetzte Richtungen bezüglich der Basis angeregt wird, so dass der Schwerpunkt des Schwingförderers im Wesentlichen unverändert bleibt und somit Schwingungen der Basis gegenüber Schwingförderern, die keine entsprechende Gegenmaße aufweisen, zumindest deutlich in ihrer Amplitude reduziert sind. Hierdurch werden bei einer starren oder auch nur geringfügig dämpfenden Befestigung der Steuereinrichtung an der Basis in diese erheblich weniger Vibrationen eingekoppelt, wodurch die Belastungen der Komponenten der Steuereinrichtung und insbesondere der Verbindungen der Komponenten, also beispielsweise von Lötstellen, erheblich reduziert werden können. Ohne Nutzung eines entsprechenden Gegengewichts wäre der Aufwand für eine Nutzung einer in die Basis integrierten bzw. an dieser angebrachten Steuereinrichtung erheblich erhöht, da diese deutlich robuster ausgelegt werden müsste, um entsprechenden Vibrationen standhalten zu können.

Der Schwingförderer bzw. die Steuereinrichtung kann Bedienelemente und/oder ein Display aufweisen, um eine Konfiguration des Schwingförderers bzw. der Steuereinrichtung und/oder ein Auslesen von Systemparametern zu ermöglichen.

Beispielsweise kann hierüber eine Adresse für den Schwingförderer bzw. die Steuereinrichtung vorgegeben werden, die im Rahmen der Adressierungsbedingung mit der Adressinformation verglichen wird. Zudem können beispielsweise Grenzen für Amplituden und/oder Frequenzen definiert werden, eine durch die Steuereinrichtung implementierte SPS kann konfiguriert werden, Amplitudenrampen für ein Starten bzw. Stoppen des Schwingförderers können definiert werden oder Ähnliches. Hierbei kann es ausreichend sein, ein relativ kleines Display, beispielsweise eine Segmentanzeige mit einer oder wenigen Zeilen, und einige wenige Taster bereitzustellen.

Nachteilig an dem beschriebenen Vorgehen ist es, dass für die Bereitstellung von Bedienelementen bzw. des Displays ein zusätzlicher Implementierungsaufwand erforderlich ist, obwohl deren Benutzung nur selten erforderlich ist. Zudem sind entsprechende Bedienelemente und Displays teils nach einer Integration des Schwingförderers in eine größere Vorrichtung schwer zugänglich. Prinzipiell könnte daher auf entsprechende Bedienelemente bzw. ein Display verzichtet werden und es könnte stattdessen eine Konfiguration bzw. Zustandsabfrage über die Kommunikationsschnittstelle erfolgen. Sollte hierbei jedoch beispielsweise eine im Rahmen der Adressierungsbedingung ausgewertete Adresse angepasst werden, wäre es in diesem Fall typischerweise notwendig, den Schwingförderer von einem Bus bzw. Netz zu trennen, was in komplexen Vorrichtungen aufwändig sein kann.

Die oben genannten Nachteile können vermieden werden, wenn die Steuereinrichtung eine Nahfeldkommunikationsschnittstelle umfasst und dazu eingerichtet ist, über die Nahfeldkommunikationsschnittstelle in der Steuereinrichtung gespeicherte Daten an eine externe Mobileinrichtung bereitzustellen und/oder Konfigurationsdaten von der Mobileinrichtung zu empfangen, von denen der weitere Betrieb des Schwingförderers abhängt. Die Mobileinrichtung kann beispielsweise ein Smartphone oder ein Tablet sein oder auch eine dedizierte Hardware, die speziell zu diesem Zweck bereitgestellt wird. Soll ein Smartphone oder ein Tablet genutzt werden, kann durch dieses eine spezielle App ausgeführt werden, die eine entsprechende Funktionalität implementiert. Alternativ könnte die Steuereinrichtung beispielsweise einen Webserver implementieren und entsprechende Bedienvorgänge könnten somit über ein Webinterface und somit über einen üblichen Browser erfolgen.

Die Nutzung einer Nahfeldkommunikation ermöglicht es aufgrund der hierbei sehr geringen erreichten Reichweiten auch ohne eine explizite Adressierung eines einzelnen Schwingförderers bzw. einer einzelnen Steuereinrichtung genau einen Schwingförderer bzw. genau dessen Steuereinrichtung anzusprechen. Alternativ hierzu wäre auch eine drahtgebundene Kommunikation, beispielsweise über einen USB-Anschluss der Steuereinrichtung, möglich. Prinzipiell wäre es auch möglich, eine Drahtloskommunikation mit größerer Reichweite, beispielsweise über WLAN, Bluetooth^{®}, IrDA oder Ähnliches zu nutzen. Um hierbei eine robuste Adressierung eines einzelnen Schwingförderers bzw. einer einzelnen Steuereinrichtung sicherzustellen, kann beispielsweise eine feste Kennung dieses Schwingförderers mithilfe eines Barcodes oder eines QR-Codes optisch eingelesen werden.

Mithilfe der Mobileinrichtung kann beispielsweise eine Adresse des Schwingförderers vorgegeben werden, die im Rahmen der Adressierungsbedingung ausgewertet wird. Ergänzend oder alternativ kann die Konfiguration oder das Computerprogramm aufgespielt werden, um das an der Kommunikationsschnittstelle genutzte Kommunikationsprotokoll zu implementieren bzw. zu ändern bzw. die Ansteuerung der Antriebseinrichtung zu definieren, wie bereits obig erläutert wurde. Ergänzend oder alternativ können beliebig interne Parameter, beispielsweise Anlaufzeiten nach einer Freigabe, maximale Amplituden, Frequenzbereiche oder Ähnliches über die Mobileinrichtung eingestellt werden.

Zudem können über die Mobileinrichtung interne Parameter ausgelesen werden, beispielsweise Zähler, die Betriebszeiten angeben, um beispielsweise zu diagnostizieren, ob ein Wechsel des Schwingförderers oder einzelner Komponenten zweckmäßig ist. Zudem können auch Diagnosedaten bereitgestellt werden, beispielsweise Temperaturverläufe, gemessene Vibrationsamplituden und Ähnliches. Da entsprechende Mobileinrichtungen häufig ein ausreichend großes Display aufweisen, um ein komfortables Lesen zu ermöglichen, ist es beispielsweise auch möglich, dass in der Steuereinrichtung Datenblätter, Betriebsanleitungen oder Ähnliches bezüglich des Schwingförderers gespeichert sind, die über die Nahfeldkommunikationsschnittstelle bzw. die genannten Alternativen an die externen Mobileinrichtungen bereitgestellt werden können, so dass entsprechende Informationen für einen Benutzer durch den Schwingförderer selbst bereitgestellt werden können.

Neben dem erfindungsgemäßen Schwingförderer betrifft die Erfindung eine Vorrichtung umfassend einen erfindungsgemäßen ersten Schwingförderer und einen erfindungsgemäßen zweiten Schwingförderer, dessen Steuereinrichtung als die externe Kommunikationseinrichtung über die Kommunikationsschnittstelle mit der Steuereinrichtung des ersten Schwingförderers kommuniziert. Dies kann beispielsweise dazu dienen, eine dezentrale Steuerung zu implementieren, bei der der erste Schwingförderer Anweisungen an den zweiten Schwingförderer überträgt und/oder umgekehrt. Ergänzend oder alternativ können beispielsweise Sensordaten zwischen dem ersten und zweiten Schwingförderer ausgetauscht werden bzw. die weiteren obig erläuterten Vorteile einer Kommunikation zwischen Schwingförderern können erreicht werden.

Die Kommunikationsverbindung des ersten und zweiten Schwingförderers über ihre jeweiligen Kommunikationsschnittstellen kann ein Abschnitt eines Busses oder eines Netzwerks mit Linientopologie oder Ringtopologie bilden. Wie bereits obig erläutert, resultiert bei den genannten Topologien ein besonders geringer Verkabelungsaufwand, wobei dennoch eine Kommunikation zwischen allen Teilnehmern des Busses bzw. des Netzwerks möglich sein kann.

Die Steuereinrichtung des ersten Schwingförderers kann dazu eingerichtet sein, eine Steuerinformation für den zweiten Schwingförderer oder einen an den Bus oder das Netzwerk angeschlossenen weiteren Schwingförderer zu ermitteln und eine diese umfassende, an den zweiten oder den weiteren Schwingförderer adressierte Kommunikationsnachricht über die Kommunikationsschnittstelle zu senden. Dies kann zweckmäßig sein, um eine dezentrale Steuerung innerhalb der Vorrichtung zu implementieren. Beispielsweise kann ein Schwingförderer anhand von Sensordaten, beispielsweise anhand von Daten einer Lichtschranke, erkennen, dass sich Objekte in der Förderstrecke stauen und wenigstens einen vorgelagerten Schwingförderer anweisen, die Förderung einzustellen, bis die gestauten Objekte abtransportiert sind. Umgekehrt kann durch den Schwingförderer selbst oder eine nachgelagerte Einrichtung erkannt werden, dass Transport- bzw. Verarbeitungskapazitäten frei sind und zusätzliche Objekte gefördert werden sollen. In diesem Fall kann der Schwingförderer an den nächsten aufwärts in der Förderkette liegenden Schwingförderer oder eine andere entsprechende Einrichtung die Anweisung übertragen, Objekte bereitzustellen. Dieser Schwingförderer bzw. diese Einrichtung kann dann anhand von Sensordaten feststellen, ob durch sie selbst Objekte bereitgestellt werden können oder ob eine entsprechende Anweisung zur Bereitstellung an weitere vorgelagerte Einrichtungen übertragen werden sollte.

Bei den geschilderten Beispielen bzw. allgemein bei einer dezentralen oder auch bei einer zentralen Steuerung der Schwingförderer über entsprechende Kommunikationsnachrichten ist es vorteilhaft, dass durch die Adressierung einzelner Schwingförderer bzw. von Gruppen von Schwingförderern durch die Adressinformation auch gezielt Schwingförderer angesteuert bzw. Daten von diesen abgefragt werden können, die nicht unmittelbar mit der steuernden bzw. abfragenden Einrichtung verbunden sind. Diese unterscheidet sich deutlich von der im Stand der Technik üblichen sternförmigen Verbindung der einzelnen Schwingförderer mit einer zentralen Steuerung.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel einer erfindungsgemäßen Vorrichtung, die mehrere Ausführungsbeispiele erfindungsgemäßer Schwingförderer umfasst,
- Fig. 2: den Aufbau der Steuereinrichtung eines Ausführungsbeispiels des erfindungsgemäßen Schwingförderers,
- Fig. 3: ein weiteres Ausführungsbeispiel eines erfindungsgemäßen Schwingförderers, und
- Fig. 4: eine Detailansicht der Basis eines weiteren Ausführungsbeispiels des erfindungsgemäßen Schwingförderers.

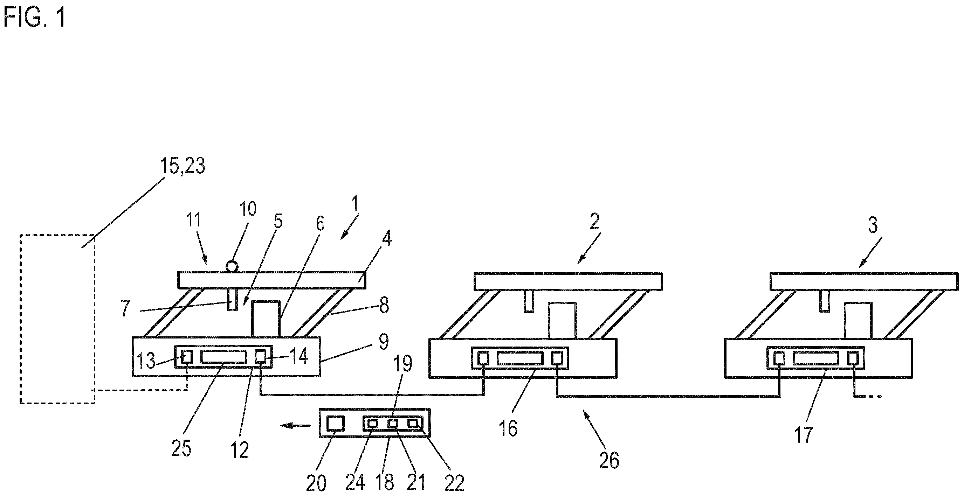

Fig. 1 zeigt eine Vorrichtung, beispielsweise eine Förderstrecke bzw. einen Teil einer Produktionsstrecke, die mehrere Schwingförderer 1, 2, 3 sowie optional eine zentrale Steuereinrichtung 23 umfasst. Die Schwingförderer 1, 2, 3 weisen jeweils eine Fördervorrichtung 4, im Beispiel eine Förderschiene, und eine Antriebseinrichtung 5, die im Beispiel durch einen Elektromagneten 6 und ein Joch 7 gebildet ist, auf. Die Fördervorrichtung 4 ist über Federn 8, insbesondere Blattfedern, an einer Basis 9 gelagert, so dass durch Ansteuerung der Antriebseinrichtung 5 durch eine Steuereinrichtung 12, insbesondere durch periodische Bestromung des Elektromagneten 6 durch die Steuereinrichtung 12, die Fördervorrichtung 4 zu Schwingungen bezüglich der Basis 9 angeregt werden kann, um ein durch die Fördervorrichtung 4 gelagertes Objekt 10 in eine Förderrichtung, also in Horizontalrichtung in Fig. 1, zu fördern.

Aus Übersichtlichkeitsgründen sind in Fig. 1 die verschiedenen Schwingförderer 1, 2, 3 beabstandet voneinander dargestellt und es sind keine weiteren Komponenten der Vorrichtung gezeigt, die Objekte 10 zwischen den Förderflächen 11 der Fördervorrichtungen 4 der Schwingförderer 1, 2, 3 transportieren können, beispielsweise Rutschen, Greifarme oder Ähnliches. Ein typischer Anwendungsfall für den beschriebenen Schwingförderer wird es jedoch sein, dass das Objekt 10 im Rahmen des Transports oder der Verarbeitung die Förderoberflächen 11 von allen Schwingförderern 1, 2, 3 oder von zumindest Teilen der Schwingförderer 1, 2, 3 überquert.

Um den Installations- und Verkabelungsaufwand für den jeweiligen Schwingförderer 1, 2, 3 gering zu halten, ist die jeweilige Steuereinrichtung 12 in die Basis 9 des jeweiligen Schwingförderers 1, 2, 3 integriert oder an dieser angebracht. Somit bildet der jeweilige Schwingförderer 1, 2, 3 eine Embedded-Device mit integrierter Intelligenz, die durch die Steuereinrichtung 12 bereitgestellt wird. Prinzipiell wäre es möglich, relativ einfache Steuereinrichtungen 12 zu verwenden, die die jeweilige Fördereinrichtung 4 stets zu Schwingungen mit einer festen oder am Gerät selbst einstellbaren Amplitude antreiben, solange eine entsprechende Freigabe von der zentralen Steuereinrichtung 23 vorliegt, wobei entsprechende Freigabesignale sternförmig von der zentralen Steuereinrichtung 23 zu den jeweiligen Steuereinrichtungen 12 geführt werden müssten. Da eine solche sternförmige Zuführung von Freigabesignalen jedoch einerseits zu einem hohen Verdrahtungsaufwand führt, insbesondere, wenn relativ viele Schwingförderer 1, 2, 3 in der Vorrichtung genutzt werden, und andererseits für viele Zwecke eine flexiblere Steuerung gewünscht ist, über die beispielsweise auch Schwingfrequenzen oder Amplituden angepasst werden können, wird in der in Fig. 1 dargestellten Vorrichtung ein anderer Steuerungsansatz genutzt.

Hierbei weisen die Steuereinrichtungen 12 jeweils wenigstens eine Kommunikationsschnittstelle 13, 14, im Beispiel zwei Kommunikationsschnittstellen 13, 14, auf, über die sie mit externen Kommunikationseinrichtungen 15, 16, 17 kommunizieren. Die Kommunikationseinrichtung 15 ist die zentrale Steuereinrichtung 23, während die Kommunikationseinrichtungen 16, 17 die Steuereinrichtungen 12 der anderen Schwingförderer 2, 3 sind.

Um es zu ermöglichen, dass gezielt einer der Schwingförderer 1, 2, 3 durch die zentrale Steuereinrichtung 23 oder die Steuereinrichtung 12 eines anderen der Schwingförderer 1, 2, 3 angesprochen wird, beispielsweise, um seinen Betrieb freizugeben oder zu unterbrechen, ist die Steuereinrichtung 12 bzw. eine Verarbeitungseinrichtung 19 der Steuereinrichtung 12, beispielsweise ein FPGA, dazu eingerichtet, bei einem Empfang einer Kommunikationsnachricht 18 über die jeweilige Kommunikationsschnittstelle 13, 14, die eine Adressinformation 20 und eine Steuerinformation 21 umfasst, zunächst zu prüfen, ob eine Adressierungsbedingung erfüllt ist, deren Erfüllung von der Adressinformation 20 abhängt. Im einfachsten Fall kann der jeweiligen Steuereinrichtung 12 und somit dem jeweiligen Schwingförderer 1, 2, 3 eine Adresse zugeordnet sein und die Adressinformation wird mit dieser Adresse verglichen, wobei die Adressierungsbedingung nur dann erfüllt ist, wenn die Adressinformation der Adresse entspricht. Dies ermöglicht eine individuelle Adressierung der Schwingförderer 1, 2, 3 bzw. ihrer Steuereinrichtungen 12.

In einigen Fällen kann es jedoch auch gewünscht sein, Schwingförderer 1, 2, 3 in Gruppen anzusteuern, so dass es auch möglich ist, dass mehreren Schwingförderern die gleiche Adresse zugeordnet ist oder dass einem einzelnen Schwingförderer mehrere Adressen zugeordnet sind, von denen beispielsweise einen eine ausschließliche Adressierung dieses Schwingförderers und eine andere eine Adressierung einer Gruppe von Schwingförderern, die diesen Schwingförderer umfasst, ermöglicht. Ist die Adressierungsbedingung nicht erfüllt, kann die entsprechende Kommunikationsnachricht verworfen werden bzw. dann, wenn die Kommunikation nicht über einen Bus mit gemeinsamem Medium erfolgt, also wenn Kontakte der Kommunikationsschnittstellen 13, 14 nicht durchgeschliffen sind, an die andere der Kommunikationsschnittstellen 13, 14 weitergeleitet werden, um eine Adressierung von hinter dem jeweiligen Schwingförderer 1, 2, 3 in der Kommunikationskette liegenden Einrichtungen zu ermöglichen.

In Fig. 1 ist schematisch eine Kommunikationsnachricht 18 dargestellt, die von dem Schwingförderer 2 zu dem Schwingförderer 1 läuft. Wird davon ausgegangen, dass in Fig. 1 eine Linientopologie mit dem vorangehend erläuterten Forwarding von Kommunikationsnachrichten implementiert ist, könnte diese Kommunikationsnachricht von dem Schwingförderer 2 stammen oder von diesem weitergeleitet worden sein, da sie beispielsweise von dem Schwingförderer 3 oder einem nicht dargestellten weiteren Schwingförderer oder einer weiteren Einrichtung stammt, die diese über den Schwingförderer 3 an den Schwingförderer 2 übertragen hat. Die Adressierungsbedingung könnte beispielsweise nicht erfüllt sein, weil die Kommunikationsnachricht 18 an die externe Kommunikationseinrichtung 15, also die zentrale Steuereinrichtung 23 adressiert sein könnte.

Handelt es sich bei der Kommunikationsnachricht 18 jedoch um eine Kommunikationsnachricht 18, deren Adressinformation 20 die Adressierungsbedingung erfüllt, so werden die als Teil der Kommunikationsnachricht 18 übertragenen Steuerinformationen 19 durch die Verarbeitungseinrichtung 25 der Steuereinrichtung 12 im Rahmen der zukünftigen Ansteuerung der Antriebseinrichtung 5 berücksichtigt. Hierbei kann je nach Inhalt der Steuerinformation19 und dem aktuellem Betriebszustand des jeweiligen empfangenden Schwingförderers 1, 2, 3 unmittelbar eine Veränderung der aktuellen Ansteuerung der Antriebseinrichtung 5 durch die Steuereinrichtung 12 erfolgen oder es kann ein interner Steuerparameter verändert werden, von dem wenigstens eine zeitlich nachfolgende Ansteuerung der Antriebseinrichtung 5 durch die Steuereinrichtung 12 abhängt, indem er auf einen von der Steuerinformation 19 abhängigen Wert gesetzt wird.

Die Steuerinformation 19 kann beispielsweise eine Freigabe des Betriebs des jeweiligen Schwingförderers 1, 2, 3 betreffen, das heißt insbesondere angeben, ob ein Betrieb des jeweiligen Schwingförderers 1, 2, 3 erfolgen soll oder nicht. Stimmt der Sollzustand mit dem Istzustand überein, ändert sich die Ansteuerung nicht. Anderenfalls kann der Schwingförderer gestartet werden, wobei insbesondere die Amplitude einer durch die Steuereinrichtung 12 ausgegebenen Spannung bzw. des ausgegebenen Stroms kontinuierlich erhöht werden kann, um ein gleichmäßiges Anlaufen zu ermöglichen. Umgekehrt kann ein Empfang einer geeigneten Steuerinformation auch dazu führen, dass der Betrieb des Schwingförderers vorübergehend unterbrochen wird.

Eine empfangene Steuerinformation 19 kann auch dazu dienen, eine Amplitude, Frequenz und/oder Phase einer an die Antriebseinrichtung 5 ausgegebenen Wechselspannung anzupassen, wird eine solche Parameteränderung empfangen, während der jeweilige Schwingförderer 1, 2, 3 nicht betrieben wird und löst diese Steuerinformation 19 nicht zugleich einen Betrieb des Schwingförderers 1, 2, 3 aus, führt dies zunächst zur Änderung des internen Steuerparameters, der bei der nachfolgenden Ansteuerung berücksichtigt wird.

Um eine gute Interoperabilität diverser Vorrichtungen, die auch von unterschiedlichen Herstellern stammen können, innerhalb des über die Kommunikationsschnittstellen 13, 14 gebildeten Netzwerks 26 zu erreichen, kann es vorteilhaft sein, Kommunikationsnachrichten 18 gemäß dem OPC-UA-Standard zu verwenden oder allgemein ausgedrückt netzwerkaufrufbare Funktionen zu nutzen, um die einzelnen Schwingförderer 1, 2, 3 zu steuern bzw. interne Parameter anzupassen und/oder auszulesen. Hierbei wirken die einzelnen Schwingförderer 1, 2, 3 bzw. die zentrale Steuereinrichtung 23 als Objekte im Sinne der objektorientierten Programmierung, die interne Variablen aufweisen und durch andere Einrichtungen aufrufbare Funktionen implementieren.

In diesem Fall kann die Adressinformation 20 als Auswahl desjenigen Objekts bzw. derjenigen Einrichtung betrachtet werden, dessen bzw. deren Funktion aufgerufen werden soll. Die Steuerinformation 19 kann in diesem Fall beispielsweise eine Funktionsauswahl 24 der aufzurufenden Funktion sowie Parameter 21, 22 dieser Funktion umfassen. Wird beispielsweise durch die Funktionsauswahl 24 eine Funktion zum Setzen eines internen Steuerparameters ausgewählt, kann der zu setzende Steuerparameter durch den Parameter 21 gewählt werden, also beispielsweise vorgegeben werden, ob eine Amplitude, eine Frequenz oder eine Phase vorgegeben werden soll. Der Parameter 22 kann dann den Sollwert des Steuerparameters vorgeben. Durch einen anderen Wert der Funktionsauswahl 24 könnte beispielsweise eine Anforderung von Messgrößen, beispielsweise von in dem jeweiligen Schwingförderer 1, 2, 3 verbauten bzw. dort angeschlossenen Sensoren, erfolgen, wobei die Parameter 21, 22 beispielsweise angeben können, welcher Sensor ausgelesen werden soll.

Die Nutzung der zentralen Steuereinrichtung 23 in Fig. 1 ist optional. In einigen Anwendungsfällen kann es zwar vorteilhaft sein, eine solche zentrale Steuereinrichtung zu nutzen. Da jedoch die Steuereinrichtungen 12 der einzelnen Schwingförderer 1, 2, 3 bereits komplexe Steueraufgaben durchführen können und durch Austausch von Kommunikationsnachrichten 18 auch Daten von Steuereinrichtungen 12 jeweils anderer Schwingförderer 1, 2, 3 abfragen bzw. diese Schwingförderer 1, 2, 3 steuern können, kann auch eine dezentrale Steuerung implementiert werden. Ansätze zur Implementierung solcher dezentralen Steuerungen wurden bereits im allgemeinen Teil der Beschreibung erläutert.

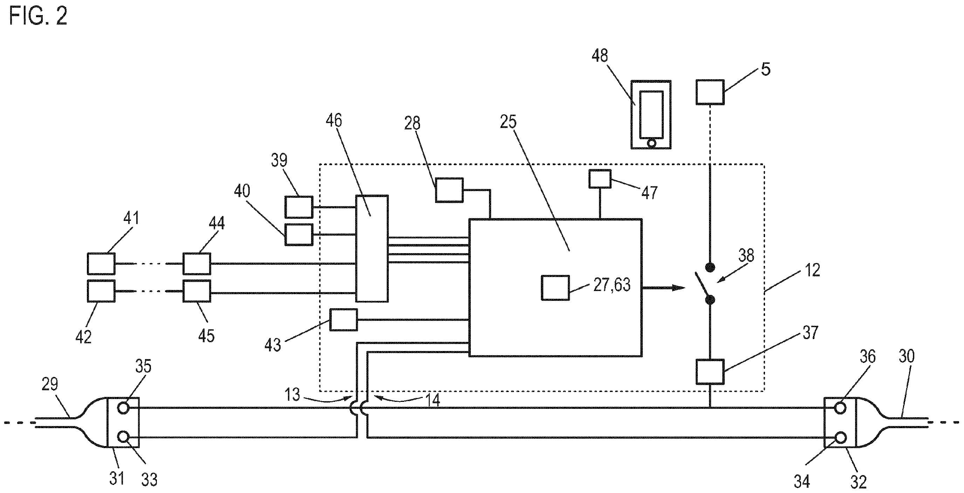

Weitere Details zur Implementierung und Funktion der Steuereinrichtung 12 und zur Kommunikation zwischen den Schwingförderern 1, 2, 3 werden im Folgenden mit Bezug auf Fig. 2 erläutert werden. Um das in Fig. 1 schematisch dargestellte Netzwerk 26 mit Linientopologie und zugleich eine Stromversorgung der Schwingförderer 1, 2, 3 mit minimalem Aufwand zu implementieren, weist jeder der Schwingförderer 1, 2, 3 zwei Anschlüsse 31, 32 für ein jeweiliges Hybridkabel 29, 30 auf, das den jeweiligen Schwingförderer 1, 2, 3 mit der in dem Netzwerk 26 benachbarten Einrichtung, insbesondere mit einem weiteren der Schwingförderer 1, 2, 3 verbindet. Die Hybridkabel umfassen sowohl Strom- als auch Kommunikationsleitungen. Beispielsweise können vier Kommunikationsleitungen für eine Ethernet-Kommunikation und zwei Leitungen für eine Stromversorgung vorgesehen sein. Aus Übersichtlichkeitsgründen ist für den jeweiligen Anschluss 31, 32 in Fig. 2 schematisch nur jeweils ein Kontakt 33, 34 für die jeweilige Kommunikationsschnittstelle 13, 14 und ein Kontakt 35, 36 für die Stromversorgung dargestellt.

Die Steuerung der Bestromung der Antriebseinrichtung 5 erfolgt in dem gezeigten Ausführungsbeispiel dadurch, dass der über die Kontakte 35, 36 bereitgestellter Strom nach einer Gleichrichtung 37 einem Schaltmittel 38, beispielsweise einem Transistor, zugeführt wird, der durch die Verarbeitungseinrichtung 25 der Steuereinrichtung 12 gesteuert wird, um eine PWM-basierte Spannungsbereitstellung für die Antriebseinrichtung 5 zu realisieren. Aufgrund der Impedanz des Elektromagneten 6 bzw. der Nutzung einer nicht gezeigten Filterschaltung ist durch Einstellung der Pulsweite der Modulation eine aktuell an die Antriebseinrichtung 5 ausgegebene Spannung einstellbar und durch Variation der Pulsweite über die Zeit kann letztlich ein beliebiger zeitlicher Spannungs- bzw. Stromverlauf an die Antriebseinrichtung 5 ausgegeben werden.

Die Verarbeitungseinrichtung 25 ist im Beispiel durch einen FPGA gebildet und somit frei programmierbar. Die Steuerung der Antriebseinrichtung 5, insbesondere die Abhängigkeit dieser Steuerung von empfangenen Kommunikationsnachrichten 18 bzw. Sensordaten von angeschlossenen Sensoren 39 bis 42 kann somit durch eine geeignete Konfiguration 27 des FPGAs, die auch als Programmierung betrachtet werden kann, vorgegeben werden. Die Konfiguration 27 kann beispielsweise beim Starten der Steuereinrichtung 12 jeweils aus einem internen Speicher 28, beispielsweise aus einem Flash-Speicher ausgelesen werden oder in der Verarbeitungseinrichtung 25 selbst gespeichert sein. Alternativ wäre es beispielsweise möglich, die Verarbeitungseinrichtung 25 durch einen Microcontroller oder Ähnliches zu implementieren. In diesem Fall könnte statt der Konfiguration 27 des FPGAs ein Computerprogramm 63 genutzt werden, das das Verhalten der Verarbeitungseinrichtung 25 vorgibt.

Neben der Anpassbarkeit der Ansteuerung der Antriebseinrichtung 5 ist die freie Programmierbarkeit der Verarbeitungseinrichtung 25 vorteilhaft, da durch Änderung der Konfiguration 27 bzw. des Computerprogramms 63 auch ein Kommunikationsprotokoll, über das über die Kommunikationsschnittstellen 13, 14 mit den externen Kommunikationseinrichtungen 15, 16, 17 kommuniziert wird, verändert werden kann. Soweit somit unterschiedliche Kommunikationsprotokolle elektrisch zueinander kompatibel sind, kann alleine durch eine Umprogrammierung der Verarbeitungseinrichtung 25 bedarfsgerecht gewählt werden, über welches Kommunikationsprotokoll die Steuereinrichtung 12 bzw. der jeweilige Schwingförderer mit anderen Einrichtungen kommuniziert, wodurch eine Einbindung des Schwingförderers 1, 2, 3 in bestehende Netze erheblich vereinfacht wird.

Es ist prinzipiell möglich, die Konfiguration 27 bzw. das Computerprogramm 63 durch Senden einer entsprechenden Kommunikationsnachricht 18 über die Kommunikationsschnittstelle 13, 14 zu ändern. In vielen Anwendungsfällen ist es jedoch vorteilhaft, die Konfiguration 27 bzw. das Computerprogramm 63 über eine dedizierte Programmierschnittstelle 43, beispielsweise einen SPI-Bus, in die Steuereinrichtung 12 einzuspielen.

Wie bereits vorangehend erwähnt, können über die Verarbeitungseinrichtung 25 Sensordaten von mehreren Sensoren 39 bis 42 erfasst werden. Hierbei können beispielsweise die Sensoren 39 und 40 in den jeweiligen Schwingförderer 1, 2, 3 integrierte Temperatur- und Vibrationssensoren sein. Die Sensoren 41, 42 können externe Sensoren sein, die an einen jeweiligen Sensoranschluss 44, 45 des Schwingförderers 1, 2, 3 angeschlossen sind. Falls die Sensoren 39 bis 42 unmittelbar Digitaldaten bereitstellen, könnten sie prinzipiell unmittelbar mit Anschlüssen der Verarbeitungseinrichtung 25, also insbesondere eines FPGAs, verbunden werden. Zum Schutz der Verarbeitungseinrichtung 25 bzw. zur Spannungsumsetzung, beispielsweise wenn Sensoren gemäß dem 24 V-Standard verwendet werden, kann jedoch ein Baustein 46 zur Umsetzung zwischen die Verarbeitungseinrichtung 25 und die Sensoren 39, 40 bzw. die Sensoranschlüsse 44, 45 geschaltet sein. Alternativ könnte ein entsprechender Baustein 46 auch eine Analog-Digital-Wandlung durchführen, um auch analoge Sensorsignale verarbeiten zu können.

Die Sensordaten der Sensoren 39 bis 42 können einerseits in der Steuereinrichtung 12 selbst verarbeitet werden, um die Antriebseinrichtungen 5 im jeweiligen Schwingförderer 1, 2, 3 zu betreiben. Es können jedoch auch Sensordaten oder von den Sensordaten abhängige Kommunikationsdaten über zumindest eine der Kommunikationsschnittstellen 13, 14 an zumindest eine der externen Kommunikationseinrichtungen 15 bis 17 übertragen werden, was beispielsweise dazu dienen kann, Sensoren, die örtlich relativ weit von dem Schwingförderer 1, 2, 3 entfernt sind, für dessen Betrieb sie besonders relevant sind, an einem örtlich näher liegenden der Schwingförderer 1, 2, 3 anzuschließen und die Daten von dort aus über das Netzwerk 26 zu übertragen.

In einigen Fällen kann es gewünscht sein, lokal am Gerät selbst Einstellungen für die einzelne Steuereinrichtung 12 bzw. die einzelnen Schwingförderer 1, 2, 3 vorzunehmen, ohne dass dies über das Netzwerk 26 erfolgen muss. Dies kann beispielsweise zweckmäßig sein, um die Adresse des jeweiligen Schwingförderers 1, 2, 3, die im Rahmen der Adressierungsbedingung ausgewertet wird, zu ändern. Zugleich kann es gewünscht sein, unmittelbar bestimmte Parameter, die einen Verschleiß indizieren können, beispielsweise einen zeitlichen Verlauf von Temperatur- oder Vibrationswerten, aus der Steuereinrichtung 12 auszulesen. Entsprechende Konfigurations- bzw. Auslesevorgänge könnten über ein an dem jeweiligen Schwingförderer 1, 2, 3 angebrachtes Display und zugeordnete Bedienelemente realisiert werden. Da es sich jedoch um relativ selten genutzte Funktionen handelt, wären allenfalls sehr einfache Displays und Bedienelemente ökonomisch sinnvoll implementierbar, die jedoch keine komfortable Bedienung ermöglichen.

Die Steuereinrichtung 12 nutzt daher eine Nahfeldkommunikationsschnittstelle 47, die über kurze Entfernungen, beispielsweise einige Zentimeter oder einige zehn Zentimeter, mit einer externen Mobileinrichtung 48, im Beispiel mit einem Smartphone mit entsprechender installierter App, kommunizieren kann, um über die Mobileinrichtung 48 entsprechende Einstellungen vornehmen zu können bzw. Daten auslesen zu können. Da somit ein relativ großes Display bereitsteht und eine komfortable Informationsanzeige möglich ist, kann beispielsweise in dem Speicher 28 auch ein Handbuch für den Schwingförderer 1, 2, 3 bzw. die Steuereinrichtung 12 gespeichert sein, das über die Mobileinrichtung bedarfsgerecht an einen Benutzer bereitgestellt werden kann.

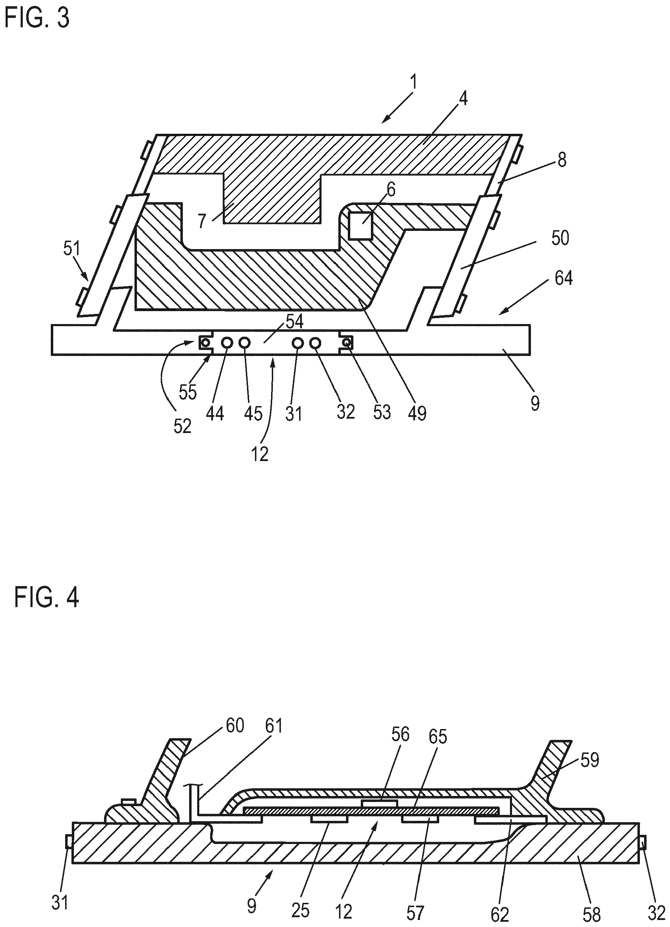

In Fig. 1 ist aus Übersichtlichkeitsgründen ein relativ einfacher Aufbau der Schwingförderer 1, 2, 3 dargestellt, bei dem jedoch ein recht starker Schwingungseintrag in die Basis 9 erfolgen würde, wodurch hohe Anforderungen an die Robustheit der Steuereinrichtung 12 resultieren. Insbesondere können Lötstellen von relativ schweren Bauteilen auf Leiterplatten hierbei stark belastet werden. Eine Möglichkeit, entsprechende Vibrationsbelastungen für die Steuereinrichtung 12 zu reduzieren oder sogar weitgehend vollständig zu vermeiden, ist in Fig. 3 dargestellt. Der dort dargestellte Schwingförderer 1 nutzt ähnlich, wie die in Fig. 1 dargestellten Schwingförderer 1 bis 3, einen Elektromagneten 6, um ein Joch 7 der Fördervorrichtung 4 anzuziehen. Im Gegensatz zur Direktmontage des Elektromagneten 6 an der Basis 9, wie sie in Fig. 1 dargestellt ist, ist der Elektromagnet 6 in Fig. 3 jedoch an einem Gegengewicht 49 angebracht, das über ein weiteres Paar Federn 50, insbesondere von Blattfedern, an der Basis 9 befestigt ist. Bei einer periodischen Bestromung des Elektromagneten 6 resultiert somit eine gegenphasige Schwingung von Fördervorrichtung 4 und Gegengewicht 49, wodurch sich die über die Federn 8, 50 an dem jeweiligen Befestigungspunkt 51 auf die Basis 9 übertragenen Kräfte weitgehend gegenseitig kompensieren und somit nur ein sehr geringer Vibrationseintrag in die Basis 9 resultiert.

Fig. 3 zeigt zudem eine konkrete Möglichkeit, die Steuereinrichtung 12 in die Basis 9 zu integrieren. Die Basis 9 weist hierbei im Bereich zwischen den Federn 8, 50 eine Ausnehmung 55 auf, in die die Steuereinrichtung 12, die in einem separaten Gehäuse angeordnet ist, eingeführt ist, wonach Sie über Laschen 53 an der Basis 9 verschraubt werden kann. Die Anschlüsse 31, 32 für die Hybridkabel 29, 30 sowie die Sensoranschlüsse 44, 45 sind an einer Gehäusewand 54 des Gehäuses der Steuereinrichtung 12 angebracht.

Statt der Nutzung einer solchen Ausnehmung 55 könnte das Gehäuse der Steuereinrichtung 12 auch an Außenflächen der Basis 9 angebracht sein, beispielsweise an der seitlichen Außenfläche 52 oder an einer oberen Außenfläche 64. Die Gehäuseform kann bedarfsgerecht gewählt werden, um zu einem kompaktbauenden Schwingförderer 1 zu gelangen.

Eine weitere Möglichkeit zur Integration der Steuereinrichtung 12 in eine Basis 9 eines Schwingförderers 1, 2, 3 ist schematisch in Fig. 4 dargestellt. Aus Übersichtlichkeitsgründen wird hierbei nur die Basis 9 dargestellt, die im gezeigten Beispiel durch drei Komponenten 58, 59, 60 gebildet ist. Die Steuereinrichtung 12 wird durch eine Leiterplatte 65 gebildet, die die Verarbeitungseinrichtung 25 sowie weitere nur schematisch dargestellte Komponenten 56, 57 trägt. Die Anschlussklammern 61,62 sind einerseits an der Leiterplatte 65 befestigt, beispielsweise dort verklebt und/oder verschweißt, und werden andererseits durch die Komponenten 58, 59 der Basis 9 geklemmt. Zumindest die Leiterklammer 61 ist gegenüber den Komponenten 58, 59 isoliert und es können mehrere dieser Leiterklammern 61 genutzt werden, um Anschlüsse zur Bestromung des Elektromotors 6 sowie zur Verbindung der Sensoren 39, 40 durch den Zwischenraum zwischen den Komponenten 58, 59 zu führen. Die Anschlüsse 31, 32 zum Anschluss der Hybridkabel 29, 30 können beispielsweise an den Stirnflächen der Basis 9 in Schwingungsrichtung angeordnet sein.

## Patentansprüche

1. Schwingförderer mit einer Fördervorrichtung (4) und einer Antriebseinrichtung (5), die bei einer Ansteuerung der Antriebseinrichtung (5) durch eine Steuereinrichtung (12) eine Schwingung der Fördervorrichtung (4) bezüglich einer Basis (9) des Schwingförderers (1, 2, 3) anregt, um durch eine Förderoberfläche (11) der Fördervorrichtung (4) gelagerte Objekte (10) durch diese Schwingung zu fördern, **dadurch gekennzeichnet, dass** die Steuereinrichtung (12) in die Basis (9) integriert oder an der Basis (9) angebracht ist und wenigstens eine Kommunikationsschnittstelle (13, 14) zur Kommunikation mit einer externen Kommunikationseinrichtung (15, 16, 17), insbesondere mit einer Kommunikationseinrichtung (16, 17) eines weiteren Schwingförderers (2, 3), umfasst, wobei die Steuereinrichtung (12) dazu eingerichtet ist, bei einem Empfang einer Kommunikationsnachricht (18), die eine Adressinformation (20) und eine Steuerinformation (19) umfasst, über die Kommunikationsschnittstelle (13, 14) eine Adressierungsbedingung zu prüfen, deren Erfüllung von der Adressinformation (20) abhängt, und ausschließlich bei Erfüllung der Adressierungsbedingung die Ansteuerung der Antriebseinrichtung (5) in Abhängigkeit der Steuerinformation (19) zu verändern und/oder einen internen Steuerparameter, von dem wenigstens eine zeitlich nachfolgende Ansteuerung der Antriebseinrichtung (5) durch die Steuereinrichtung (12) abhängt, auf einen von der Steuerinformation (19) abhängigen Wert zu setzten.

2. Schwingförderer nach Anspruch 1, **dadurch gekennzeichnet, dass** die Steuereinrichtung (12) ein FPGA ist oder einen FPGA umfasst.

3. Schwingförderer nach Anspruch 1 oder 2, **dadurch gekennzeichnet, dass** die Steuereinrichtung (12) eine Verarbeitungseinrichtung (25) umfasst, die ein Kommunikationsprotokoll für die Kommunikation mit der externen Kommunikationseinrichtung (15, 16, 17) über die Kommunikationsschnittstelle (13, 14) implementiert, wobei das Kommunikationsprotokoll durch eine Konfiguration (27) oder ein Computerprogramm (63) vorgegeben ist, wobei die Steuereinrichtung (12) dazu eingerichtet ist, die Konfiguration (27) oder das Computerprogramm (63) über die Kommunikationsschnittstelle (13, 14) oder eine Programmierschnittstelle (43) zu empfangen und/oder von einem wechselbaren Datenträger einzulesen.

4. Schwingförderer nach Anspruch 3, **dadurch gekennzeichnet, dass** die Verarbeitungseinrichtung (25) dazu eingerichtet ist, gemäß der Konfiguration (27) oder dem Computerprogramm (63) Steuersignale zur Ansteuerung der Antriebseinrichtung (5) bereitzustellen.

5. Schwingförderer nach einem der vorangehenden Ansprüche, **dadurch gekennzeichnet, dass** der Schwingförderer (1, 2, 3) wenigstens einen integrierten Sensor (39, 40) und/oder wenigstens einen Sensoranschluss (44, 45) zum Anschluss eines externen Sensors (41, 42) aufweist, wobei die Steuereinrichtung (12) dazu eingerichtet ist, Sensordaten des integrierten Sensors (39, 40) und/oder über den jeweiligen Sensoranschluss (44, 45) Sensordaten des externen Sensors (41, 42) zu erfassen und zum einen die Sensordaten oder von den Sensordaten abhängige Kommunikationsdaten über die Kommunikationsschnittstelle (13, 14) an die externe Kommunikationseinrichtung (15, 16, 17) zu übertragen und/oder zum anderen in Abhängigkeit der Erfüllung einer von den Sensordaten abhängigen Sendebedingung eine Kommunikationsnachricht (18) über die Kommunikationsschnittstelle (13, 14) an die externe Kommunikationseinrichtung (15, 16, 17) zu senden und/oder die Antriebseinrichtung (5) in Abhängigkeit der Sensordaten zu steuern.

6. Schwingförderer nach einem der vorangehenden Ansprüche, **dadurch gekennzeichnet, dass** die Steuereinrichtung (12) dazu eingerichtet ist, bei Erfüllung der Adressierungsbedingung einerseits eine Amplitude und/oder eine Frequenz und/oder eine Phase eines der Antriebseinrichtung (5) zugeführten Wechselstroms und/oder einer an die Antriebseinrichtung (5) ausgegebenen Wechselspannung in Abhängigkeit der Steuerinformation (19) vorzugegeben, und/oder andererseits die Antriebseinrichtung (5) nur dann zur Anregung der Schwingung der Fördervorrichtung (4) anzusteuern, wenn eine von der Steuerinformation (19) abhängige Freigabebedingung erfüllt ist.

7. Schwingförderer nach einem der vorangehenden Ansprüche, **dadurch gekennzeichnet, dass** die Steuereinrichtung (12) dazu eingerichtet ist, wenigstens eine netzwerkaufrufbare Funktion über die Kommunikationsschnittstelle (13, 14) an die externe Kommunikationseinrichtung (15, 16, 17) bereitzustellen und/oder über die Kommunikationsschnittstelle (13, 14) eine netzwerkaufrufbare Funktion der externen Kommunikationseinrichtung (15, 16, 17) aufzurufen.

8. Schwingförderer nach einem der vorangehenden Ansprüche, **dadurch gekennzeichnet, dass** er einen Anschluss (31) für ein Hybridkabel (29) aufweist, wobei der Anschluss (31) einerseits Kontakte (35) zur Stromversorgung des Schwingförderers (1, 2, 3) und andererseits wenigstens einen Kontakt (33) der Kommunikationsschnittstelle (13, 14) oder einer der Kommunikationsschnittstellen (13, 14) aufweist.

9. Schwingförderer nach Anspruch 8, **dadurch gekennzeichnet, dass** er einen weiteren Anschluss (32) zur Verbindung mit einer weiteren Komponente, insbesondere mit einem weiteren Schwingförderer (2, 3) aufweist, wobei der weitere Anschluss (32) Kontakte (36) für eine Stromversorgung der weiteren Komponente und wenigstens einen weiteren Kontakt (34) umfasst, wobei der weitere Kontakt den Kontakt (33) der Kommunikationsschnittstelle (13) des Anschlusses (31) durchschleift oder ein Kontakt (34) einer weiteren der Kommunikationsschnittstellen (13, 14) ist.

10. Schwingförderer nach einem der vorangehenden Ansprüche, **dadurch gekennzeichnet, dass** die Fördervorrichtung (4) über Federn (8) an der Basis (9) gelagert ist, wobei die Steuereinrichtung (12) starr mit der Basis (9) verbunden ist.

11. Schwingförderer nach einem der vorangehenden Ansprüche, **dadurch gekennzeichnet, dass** die Antriebseinrichtung (5) durch einen Elektromagneten (6) und ein Joch (7) gebildet ist, wobei das Joch (7) an der Fördervorrichtung (4) angebracht ist oder durch diese ausgebildet ist und der Elektromagnet (6) an einer schwingbar bezüglich der Basis (9) gelagerten Gegenmasse (49) angebracht ist oder umgekehrt.

12. Schwingförderer nach einem der vorangehenden Ansprüche, **dadurch gekennzeichnet, dass** die Steuereinrichtung (12) eine Nahfeldkommunikationsschnittstelle (47) umfasst und dazu eingerichtet ist, über die Nahfeldkommunikationsschnittstelle (47) in der Steuereinrichtung (12) gespeicherte Daten an eine externe Mobileinrichtung (48) bereitzustellen und/oder Konfigurationsdaten von der Mobileinrichtung (48) zu empfangen, von denen der weitere Betrieb des Schwingförderers (1, 2, 3) abhängt.

13. Vorrichtung umfassend einen ersten Schwingförderer nach einem der vorangehenden Ansprüche, **dadurch gekennzeichnet**, das sie einen zweiten Schwingförderer (2, 3) nach einem der vorangehenden Ansprüche umfasst, dessen Steuereinrichtung (12) als die externe Kommunikationseinrichtung (16, 17) über die Kommunikationsschnittstelle (14) mit der Steuereinrichtung (12) des ersten Schwingförderers (1) kommuniziert.

14. Vorrichtung nach Anspruch 13, **dadurch gekennzeichnet, dass** die Kommunikationsverbindung des ersten und zweiten Schwingförderers (1, 2, 3) über ihre jeweiligen Kommunikationsschnittstellen (13, 14) einen Abschnitt eines Buses oder eines Netzwerks (26) mit Linientopologie oder Ringtopologie bildet.

15. Vorrichtung nach Anspruch 13 oder 14, **dadurch gekennzeichnet, dass** die Steuereinrichtung (12) des ersten Schwingförderers (1) dazu eingerichtet ist, eine Steuerinformation (19) für den zweiten Schwingförderer (2, 3) oder einen an den Bus oder das Netzwerk (23) angeschlossenen weiteren Schwingförderer zu ermitteln und eine diese umfassende, an den zweiten oder den weiteren Schwingförderer (2, 3) adressierte Kommunikationsnachricht (18) über die Kommunikationsschnittstelle (13, 14) zu senden.
